# EUROPEAN PATENT SPECIFICATION

(11) **EP 1 849 680 B1**
(45) Date of publication and mention of the grant of the patent: **22.12.2010**
(21) Application number: 07008649.1
(22) Date of filing: 27.04.2007
(51) Int. Cl.: B62B 7/08

(54) **Baby stroller frame**
Rahmen für einen Kinderwagen
Cadre de poussette de bébé

(30) Priority: 30.04.2006 CN 200620058692 U
(43) Date of publication of application: 31.10.2007
(73) Proprietor: Lerado (Zhong Shan) Industrial Co., Ltd., Zhong Shan City Guangdong (CN)
(72) Inventor: Hou, Hung-Chung, Tai-Bau City Chaiyi County (CN)
(74) Representative: Wagner, Bernhard Peter

(56) References cited:
- EP-A- 1 466 810
- CN-A- 1 709 754
- US-A- 5 558 357
- US-A1- 2003 155 745
- US-A1- 2007 246 916

## Description

### BACKGROUND OF THE INVENTION

### FIELD OF THE INVENTION

The present invention relates to a baby stroller frame and in particular, to a baby stroller frame having a guiding frame with one end pivotally connected with a pair of front leg tubes and a pair of connecting arms which is guided by a pair of sliding sleeves mounted on a pair of rear leg tubes of the baby stroller frame.

### DESCRIPTION OF THE RELATED ART

A foldable baby stroller frame generally comprises a linkage system which can be folded from an erect position to a collapsed position. The folding can be actuated by a user's hand, so as to release a pair of joint members from a locked position. An example structure of the type of baby stroller frame can be found in U.S. Patent 5,772,235.

However, the assembly process of the above-mentioned structure requires a troublesome amount of work. Further, when applying the structure in a dual seat baby stroller, the linkage system becomes complex and increases in size, which can lead to unexpected trouble in the folding operation of the stroller.

EP 1 466 810 A1 discloses a baby stroller frame, comprising a front frame connected with a front wheel, a pair of rear leg tubes, each having an upper end pivotally connected with front frame, a lower end connected to a rear wheel, and a joint connected with a sliding sleeve. A guiding frame has a front end pivotally connected to the front frame and the connecting arm slidably connected with the sliding sleeve.

### Summary of the Invention

The object underlying the present invention is to provide a new and improved baby stroller frame that can be easily handled by a user and can be manufactured at lower costs.

This object is achieved by the baby stroller frame according to claim 1.

Refinements and advantageous developments of the invention are described in the dependent claims.

As the structure of such a stroller frame being simplified, it would much lower the manufacture cost of a baby stroller frame and provide a new and smooth operation for a user.

Further scope of the applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings, which are given by way of illustration only, and thus are not limitative of the present invention, and wherein:

FIG. 1 is an front perspective view of an embodiment of the baby stroller frame according to the present invention.

FIG. 2 is a rear perspective view of the baby stroller frame of FIG. 1.

FIG. 3 is a side view of the baby stroller frame of FIG. 1.

FIG. 4 is a schematic view showing the operation of folding the baby stroller frame from an erect state to a collapsed state.

FIG. 5 is a side view showing the folding of operation the baby stroller frame from an erect state to a collapsed state.

FIG. 6 is a side view showing the baby stroller frame being folded in a collapsed state.

### DETAILED DESCRIPTION OF THE PREFERRED EMBODIMENTS

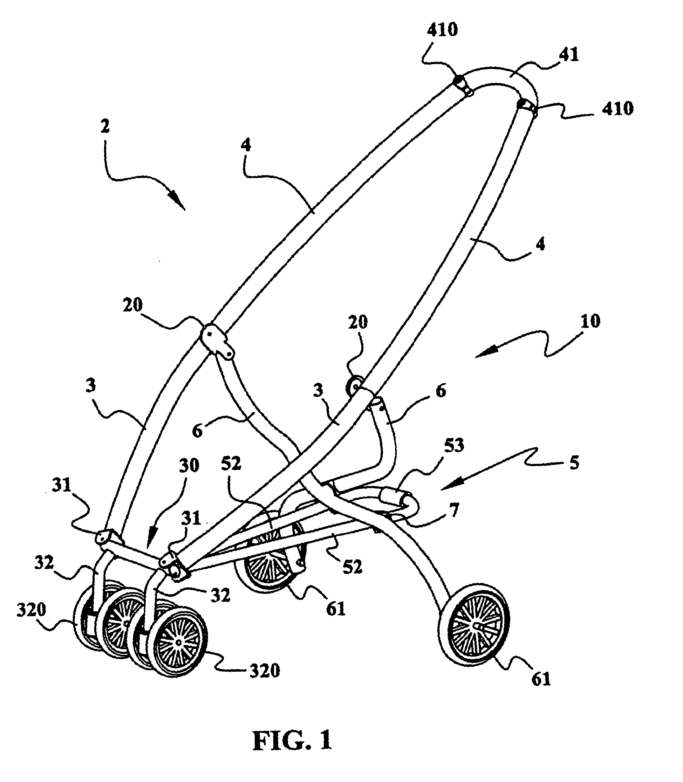

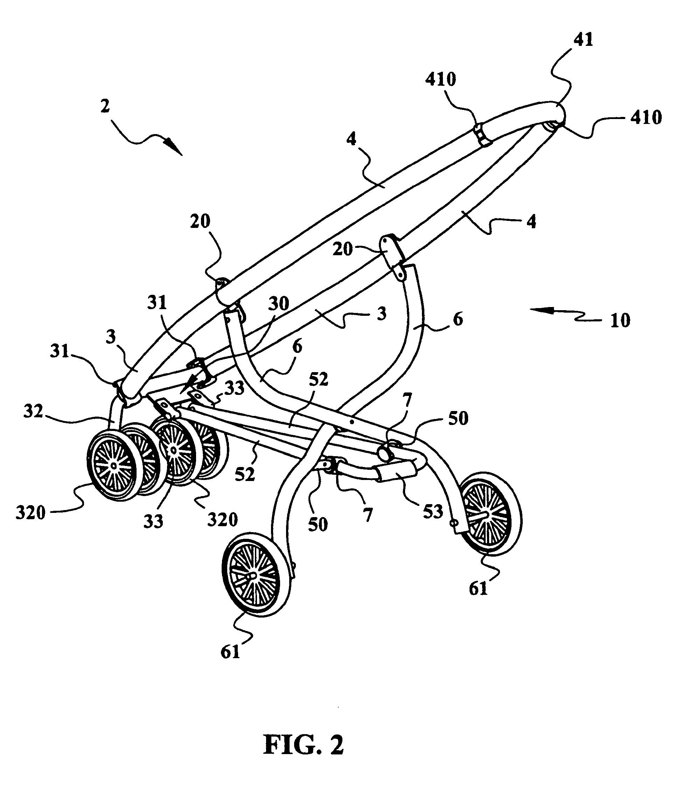

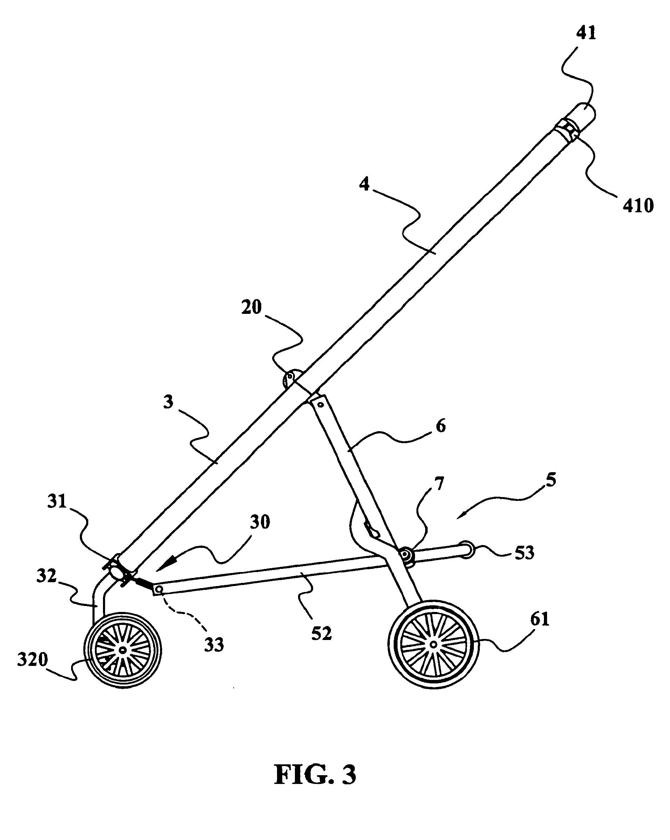

Referring to FIGS. 1, 2 and 3, an embodiment of a stroller frame 10 according to the present invention comprises a front frame 2, a guiding frame 5, and a pair of rear leg tubes 6.

The pair of rear leg tubes 6, each has an upper end pivotally connected with the front frame 2, a lower end connected at least a rear wheel 61, and mounted a sliding sleeve 7 with a joint 50 between the upper end and the lower end of the rear leg tube 6.

The front frame 2 connects at least a front wheel 320, and may have a handle 41, a pair of push arms 4, a pair of front leg tubes 3 and connecting member 30.

The pair of push arms 4, each has an upper end joint 410 and a lower end joint 20. The upper end joints 410 pivotally connected between the handle 41 and the pair of push arms 4, so as to allow the pair of push arms 4 to rotate and close to each other for reducing the width of the stroller frame 10.

The lower end joint 20 is pivotally connected between the pair of push arms 4 and the pair of front leg tubes 3, and preferably connects the upper end of the pair of rear leg tubes 6, so as to allow the pair of push arms 4, the pair of rear leg tubes 6 and the pair of front leg tubes 3 to relatively rotate and close to each other for further reducing the width of the stroller frame 10.

The connecting member 30 has a pair of side joints 31 for pivotally connecting with the pair of front leg tubes 3, a pair of support arms 32 connected with at least a front wheel 320, and a rear end joint 33 pivotally connected with the front end of the guiding frame 5.

The guiding frame 5 has a front end pivotally connected to the rear end joint 33, and a pair of connecting arms 52 slidably connected with the sliding sleeve 7 for guiding the rotation of the pair of rear leg tubes 6 between an erect position to a collapsed position.

The guiding frame 5 has rear end which is wider than the front end thereof, so as to guide the pair of rear leg tubes 6 close to each other when a user rotates the guiding frame 5 and makes the sliding sleeve 7 to slide along the pair of connecting arms 52 toward to front end thereof.

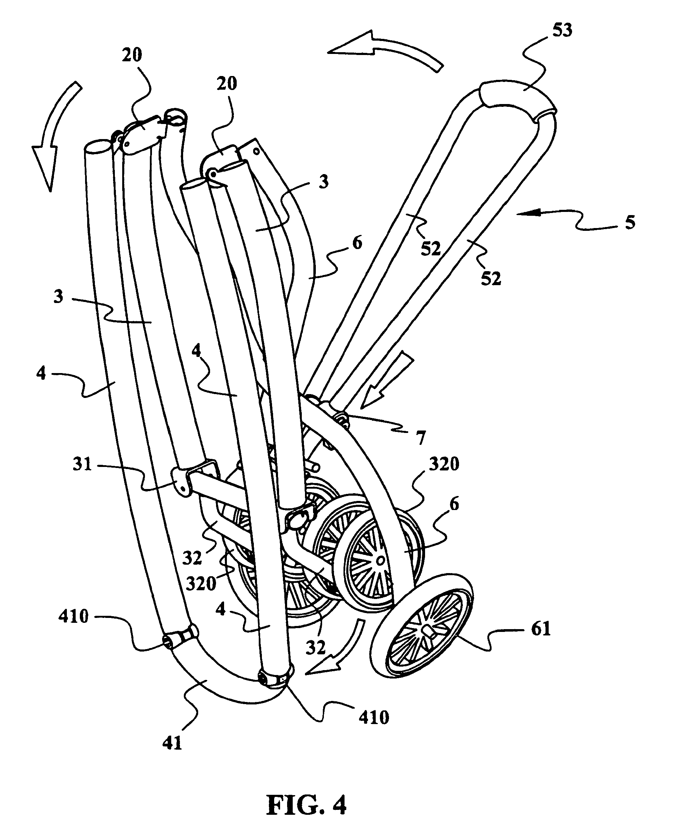

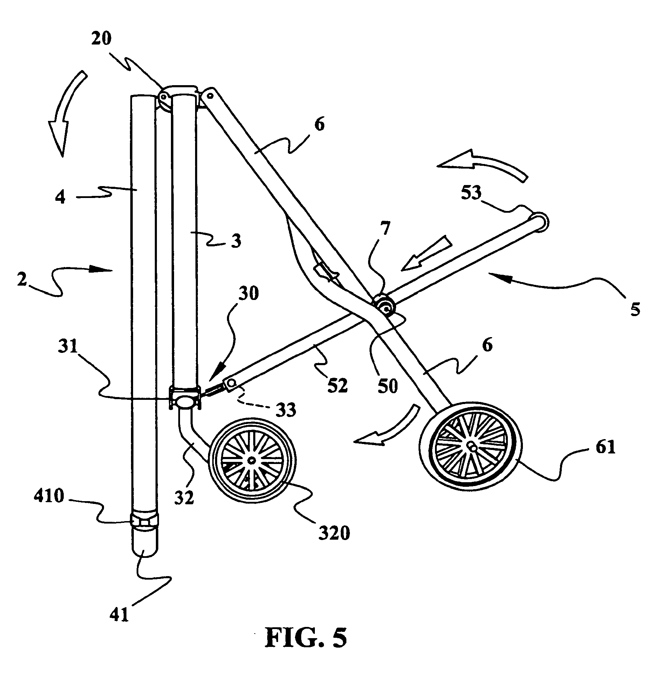

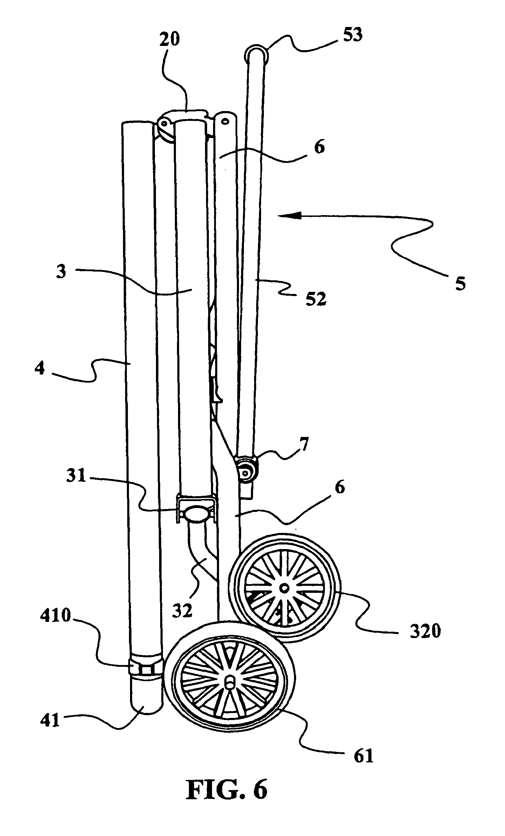

The rear end of guiding frame 5 may connected with a grip 53 to facilitate the operation by a user. Referring to FIGS. 4, 5 and 6, when the guiding frame 5 is rotated, the sliding sleeve 7 slides along the connecting arms 52 to ward the connecting member 30 and carries the pair of rear leg tubes 6 close to each other and the front leg tubes 3, as shown in FIG6.

While the invention has been described by way of example and in terms of preferred embodiments, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A baby stroller frame (10), comprising:
- a front frame (2) connected with a front wheel (320);
- a pair of rear leg tubes (6), each having an upper end pivotally connected with the front frame (2), a lower end connected a rear wheel (61), and a joint connected with a sliding sleeve (7);
- a guiding frame (5) having a front end pivotally connected to the front frame (2), and a pair of connecting arms (52) slidably connected with the sliding sleeve (7); whereby the front frame (2) has a pair of front leg tubes (3) and a connecting member (30), the connecting member (30) including:
- a support arm (32), for pivotally connecting with the front wheel (320);
- and a pair of side joints (31), for pivotally connecting with the pair of front leg tube (3); **characterized in that** the connecting member (30) includes a rear end joint (33), pivotally connecting with the front end of the guiding frame (5).

2. The baby stroller frame of claim 1, wherein the front frame has a handle (41), a pair of push arms (4), and a pair of front leg tubes (3), which are pivotally connected.

3. The baby stroller frame of claim 2, wherein the pair of push arms (4) each has an upper end joint (410) pivotally connected with the handle (41), and a lower end joint (20) pivotally connected with the front leg tube (3).

4. The baby stroller frame of claim 3, wherein the lower end joint (20) is pivotally connected between the front leg tubes (3), the rear leg tubes (6), and the push arms (4).

5. The baby stroller frame of claim 1, wherein the guiding frame (5) has a rear end, which is wider than the front end thereof.

6. The baby stroller frame of claim 1, wherein the guiding frame (5) has grip (53) connected at the rear end thereof.

7. The baby stroller frame of claim 1, wherein the guiding frame (5) guides the pair of sliding sleeves (7) to slide along the pair of connecting arms (52), so as to carry the pair of rear leg tubes to close (6) to the front frame (2).

## Patentansprüche

1. Kindersportwagenrahmen (10), der umfasst:
- einen vorderen Rahmen (2), der mit einem Vorderrad (320) verbunden ist;
- ein Paar hinterer Beinrohre (6), wovon jedes ein oberes Ende, das an dem vorderen Rahmen (2) angelenkt ist, ein unteres Ende, das mit einem Hinterrad (61) verbunden ist, und ein mit einer Gleithülse (7) verbundenes Gelenk besitzt;
- einen Führungsrahmen (5) mit einem vorderen Ende, das am vorderen Rahmen (2) angelenkt ist, und einem Paar Verbindungsarme (52), die mit der Gleithülse (7) gleitend verbunden sind;
wobei der vordere Rahmen (2) ein Paar vorderer Beinrohre (3) und ein Verbindungselement (30) besitzt, wobei das Verbindungselement (30) enthält:
- einen Unterstützungsarm (32), um das Vorderrad (23) schwenkbar zu verbinden; und
- ein Paar Seitengelenke (31), um das Paar vorderer Beinrohre (3) schwenkbar zu verbinden;
**dadurch gekennzeichnet, dass** das Verbindungselement (30) ein hinteres Endgelenk (33) umfasst, um das vordere Ende des Führungsrahmens (5) schwenkbar zu verbinden.

2. Kindersportwagenrahmen nach Anspruch 1, wobei der vordere Rahmen einen Griff (41), ein Paar Schiebearme (4) und ein Paar vordere Beinrohre (3), die schwenkbar verbunden sind, besitzt.

3. Kindersportwagenrahmen nach Anspruch 2, wobei das Paar Schiebearme (4) jeweils ein oberes Endgelenk (410), das am Griff (41) angelenkt ist, und ein unteres Endgelenk (20), das am vorderen Beinrohr (3) angelenkt ist, besitzt.

4. Kindersportwagenrahmen nach Anspruch 3, wobei das untere Endgelenk (20) zwischen den vorderen Beinrohren (3), den hinteren Beinrohren (6) und den Schiebearmen (4) schwenkbar verbunden ist.

5. Kindersportwagenrahmen nach Anspruch 1, wobei der Führungsrahmen (5) ein hinteres Ende besitzt, das breiter als sein vorderes Ende ist.

6. kindersportwagenrahmen nach Anspruch 1, wobei der Führungsrahmen (5) einen Griff (53) besitzt, das mit seinem hinteren Ende verbunden ist.

7. Kindersportwagenrahmen nach Anspruch 1, wobei der Führungsrahmen (5) das Paar Gleithülsen (7) führt, damit sie längs des Paars Verbindungsarme (52) gleiten, um das Paar hinterer Beinrohre (6) in der Nähe des vorderen Rahmens (2) zu tragen.

## Revendications

1. Cadre (10) de poussette pour bébé, comprenant :
- un cadre avant (2) relié à une roue avant (320) ;
- une paire de tubes formant jambes arrière (16), ayant chacun une extrémité supérieure reliée en pivotement au cadre avant (2), une extrémité inférieure reliée à une roue arrière (61), et une jonction reliée à un manchon coulissant (7) ;
- un cadre de guidage (5) ayant une extrémité avant reliée en pivotement au cadre avant (2), et une paire de bras de liaison (52) reliés en coulissement au manchon coulissant (7) ;
dans lequel le cadre avant (2) possède une paire de tubes formant jambes avant (3) et un élément de liaison (30), l'élément de liaison (30) incluant :
- un bras de support (32), pour être relié en pivotement avec la roue avant (320) ; et
- une paire de jonctions latérales (31), pour la liaison en pivotement avec la paire de tubes formant jambes avant (3) ;
**caractérisé en ce que** l'élément de liaison (30) inclut une jonction d'extrémité arrière (33), reliée en pivotement avec l'extrémité avant du cadre de guidage (5).

2. Cadre de poussette pour bébé selon la revendication 1, dans lequel le cadre avant comprend un guidon (41), une paire de bras de poussée (4), et une paire de tubes formant jambes avant (3), qui sont reliés en pivotement.

3. Cadre de poussette pour bébé selon la revendication 2, dans lequel la paire de bras de poussée (4) possèdent chacun une jonction d'extrémité supérieure (410) reliée en pivotement au guidon (41), et une jonction d'extrémité inférieure (20) reliée en pivotement au tube formant jambe avant (3).

4. Cadre de poussette pour bébé selon la revendication 3, dans lequel la jonction d'extrémité inférieure (20) est reliée en pivotement entre les tubes formant jambes avant (3), les tubes formant jambes arrière (6) et les bras de poussée (4).

5. Cadre de poussette pour bébé selon la revendication 3, dans lequel le cadre de guidage (5) possède une extrémité arrière qui est plus large que son extrémité avant.

6. Cadre de poussette pour bébé selon la revendication 1, dans lequel le cadre de guidage (5) comprend un moyen d'agrippement (53) relié à son extrémité arrière.

7. Cadre de poussette pour bébé selon la revendication 1, dans lequel le cadre de guidage (5) guide la paire de manchons coulissants (7) pour coulisser le long de la paire de bras de liaison (2) de manière à amener la paire de tubes formant jambes arrières à proximité (6) du cadre avant (2).
